# EUROPÄISCHE PATENTSCHRIFT

(11) **EP 1 132 246 B1**
(45) Veröffentlichungstag und Bekanntmachung des Hinweises auf die Patenterteilung: **08.10.2008**
(21) Anmeldenummer: 01103701.7
(22) Anmeldetag: 15.02.2001
(51) Int. Cl.: B60K 15/035

(54) **Entlüftungseinrichtung für einen Kraftstoffbehälter**
Venting system for a fuel tank
Système d'aération d'un réservoir de carburant

(30) Priorität: 10.03.2000 DE 10011130
(43) Veröffentlichungstag der Anmeldung: 12.09.2001
(73) Patentinhaber: Continental Automotive GmbH, 30165 Hannover (DE)
(72) Erfinder: Meyer, Knut, Dr., 45239 Essen (DE); Zapp, Thomas, Dr., 44265 Dortmund (DE); Fühling, Stefan, Dr., 44269 Dortmund (DE); Distelhoff, Markus, Dr., 60594 Frankfurt (DE)

(56) Entgegenhaltungen:
- EP-A- 0 894 707
- US-A- 4 166 550
- US-A- 4 261 477
- US-A- 4 423 746

## Beschreibung

Der Gegenstand der Erfindung betrifft eine Entlüftungseinrichtung für einen Kraftstoffbehälter eines Kraftfahrzeugs mit einem Ausgleichsbehälter und mindestens zwei in diesen mündenden Entlüftungsleitungen, wobei die Entlüftungsleitung mit jeweils einem Ende in der Nähe mindestens einer Seitenwand des Kraftstoffbehälters beginnend, zu einer gegenüberliegenden Seitenwand verlaufen, so daß das jeweils andere Ende in diesem Bereich angeordnet ist und daß das jeweils andere Ende der Entlüftungsleitungen in dem Ausgleichsbehälter angeordnet ist

Entlüftungseinrichtungen für Kraftstoffbehälter werden seit langem in Kraftfahrzeugen eingesetzt und sind somit Stand der Technik. Über die Entlüftungseinrichtung werden sowohl die beim Betanken durch den einströmenden Kraftstoff verdrängten Gase als auch die während des Betriebs des Kraftfahrzeugs anfallenden Gase, infolge des Ausgasens des Kraftstoffs, abgeführt. Zu diesem Zweck befinden sich eine oder mehrere Leitungen unterhalb der oberen Behälterwandung. Diese Leitungen führen von den Seiten des Behälters zu einer gemeinsamen Stelle, an der sie durch die Behälterwandung hindurchtreten und zu einem weiteren Behälter führen.

Eine Entlüftungseinrichtung der eingangs genannten Art ist aus der US 4,423,746 bekannt, die den Oberbegriff von Anspruch 1 beschreibt.

Des weiteren ist eine Entlüftungseinrichtung mit zwei Entlüftungsleitungen und drei Ausgleichsbehältern bekannt. Die Entlüftungsleitungen münden zu beiden Seiten des Tanks aus. Von dort führen sie auf die Gegenüberliegende Seite des Tanks und in einem Bogen wieder zurück in die Mitte, wo sie in einen zentralen Ausgleichsbehälter münden. In den Bogenabschnitten nahe der Seitenwände weisen die Leitungen eine Erweiterung auf, die ebenfalls als Ausgleichsbehälter ausgebildet ist. Mittels dieser Leitungsführung wird erreicht, daß bei Schrägstellung des Behälters die Entlüftung gewährleistet wird. Nachteilig ist, daß diese Einrichtung nur für relativ einfach gebaute Behälter geeignet ist. Weiterhin gestaltet sich infolge des labyrinthartigen Verlaufs die Leitungsführung der Entlüftungsleitungen sehr aufwendig. Hinzu kommt, daß durch die Anordnung mehrerer Ausgleichsbehälter die Vorrichtung aufwendig zu fertigen ist und die Montage im Tank einen hohen Aufwand erfordert.

Der Erfindung liegt die Aufgabe zugrunde, eine Entlüftungseinrichtung zu schaffen, die einfach aufgebaut und leicht zu montieren ist und unter allen Umständen eine sichere Entlüftung und eine maximale Befüllung des Kraftstoffbehälters gewährleistet.

Gelöst wird die Aufgabe mit den Merkmalen des Anspruchs 1. Vorteilhafte Ausgestaltungen sind in den Unteransprüchen enthalten.

Die Entlüftungseinrichtung umfaßt einen im Innern eines Kraftstoffbehälters angeordneten Ausgleichsbehälter, in den vier Entlüftungsleitungen münden. Die Entlüftungsleitungen sind dabei in den Ecken des Kraftstoffbehälters beginnend, diagonal auf den Ausgleichsbehälter zulaufend angeordnet. Der Ausgleichsbehälter kann hierbei beliebig zur Fahrzeuglängsachse angeordnet und auch x-förmig ausgebildet sein, wobei sich die einzelnen Arme des Ausgleichsbehälters zu den Entlaftungsleitungen hin erstrecken. Die Entlüftungsleitungen sind derart angeordnet, daß sich bei allen möglichen Schräglagen des Kraftstoffbehälters mindestens ein Entlüftungspunkt oberhalb des Kraftstoffspiegels befindet. Die jeweils anderen Enden der Entlüftungsleitungen sind im Ausgleichsbehälter an der jeweils gegenüberliegenden Tankseite angeordnet. Der Ausgleichsbehälter erstreckt sich somit von einer Seitenwand des Kraftstoffbehälters bis zur gegenüberliegenden Seitenwand. Damit ermöglicht die erfindungsgemäße Entlüftungseinrichtung eine zuverlässige Entlüftung für statische und dynamische Beanspruchung des Kraftstoffbehälters und erlaubt gleichzeitig eine besonders hohe Füllmenge im Kraftstoffbehälter. Durch die geometrische Gestaltung des Ausgleichsbehälters wird darüber hinaus eine einfache Leitungsführung der Entlüftungsleitungen ermöglicht, so daß aufwendige Rückführungen überflüssig sind. Gleichzeitig ist nur ein Ausgleichsbehälter notwendig. Die gesamte Entlüftungseinrichtung zeichnet sich infolge ihrer Einfachheit durch geringe Herstellungskosten, ein geringes Gewicht und eine einfache Montage aus.

Der Ausgleichsbehälter besitzt vorteilhafterweise eine als Flüssigkeitsfalle dienende Erweiterung über die eventuell in den Ausgleichsbehälter gelangter Kraftstoff in das Innere des Kraftstoffbehälters, vorzugsweise über eine Saugstrahlpumpe oder direkt über die Kraftstoffpumpe abgesaugt wird. Damit der Ausgleichsbehälter nicht über die Saugstrahlpumpe bzw. Kraftstoffpumpe bei z. B. schräg abgestellten Fahrzeug vollaufen kann, kommt ein Rückschlagventil in der Absaugleitung der Erweiterung zum Einsatz.

Die Entlüftungseinrichtung gestaltet sich besonders einfach, wenn die Entlüftungsleitungen an einer beliebigen Stelle, vorzugsweise an der Erweiterung, in den Ausgleichsbehälter eintreten und anschließend im Ausgleichsbehälter bis nahe der jeweils gegenüberliegenden Seitenwand geführt sind. Mit einer diagonalen Anordnung der Entlüftungsleitungen widersetzt sich das oben beschriebene System in optimaler Weise dem Vollaufen durch statische und dynamische Beanspruchungen und gewährleistet bei maximalen Füllstand die einwandfreie Entlüftung des Kraftstoffbehälters.

Weiterhin ist es von Vorteil, wenn der Ausgleichsbehälter über ein Schwimmer-/Roll-over-Ventil verfügt.

An drei Ausführungsbeispielen wird die Erfindung näher erläutert. Die dazugehörigen Figuren zeigen in:
- Figur 1:: einen Schnitt durch einen Kraftstoffbehälter,
- Figur 2:: die Draufsicht auf die erfindungsgemäße Entlüftungseinrichtung nach Figur 1,
- Figur 3:: die Draufsicht auf eine Entlüftungseinrichtung mit vier Entlüftungsleitungen.

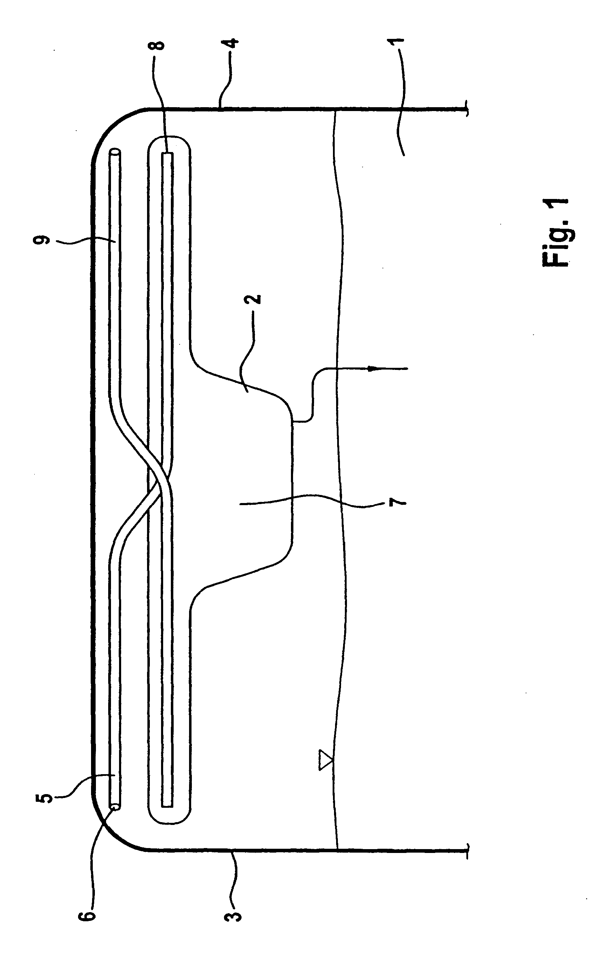

Der Kraftstoffbehälter 1 in Figur 1 weist dicht unterhalb der oberen Behälterwand einen Ausgleichsbehälter 2 auf. Dieser erstreckt sich im wesentlichen von einer Seitenwand 3 zu einer dazu gegenüberliegenden Seitenwand 4. Eine erste Entlüftungsleitung 5 mündet mit einer Öffnung 6 nahe der Seitenwand 3 ins Innere des Kraftstoffbehälters 1. In einer Erweiterung 7 des Ausgleichsbehälters 2 tritt die Entlüftungsleitung 5 in diesen ein und verläuft innerhalb des Ausgleichsbehälters 2 bis in die Nähe der Seitenwand 4, wo die Entlüftungsleitung 5 mit einer Öffnung 8 in den Ausgleichsbehälter 2 mündet. Von der gegenüberliegenden Seitenwand 4 beginnend, verläuft im Kraftstoffbehälter 1 eine zweite Entlüftungsleitung 9 zur Erweiterung 7 und von dort im Innern des Ausgleichsbehälters 2 bis nahe zur Seitenwand 3.

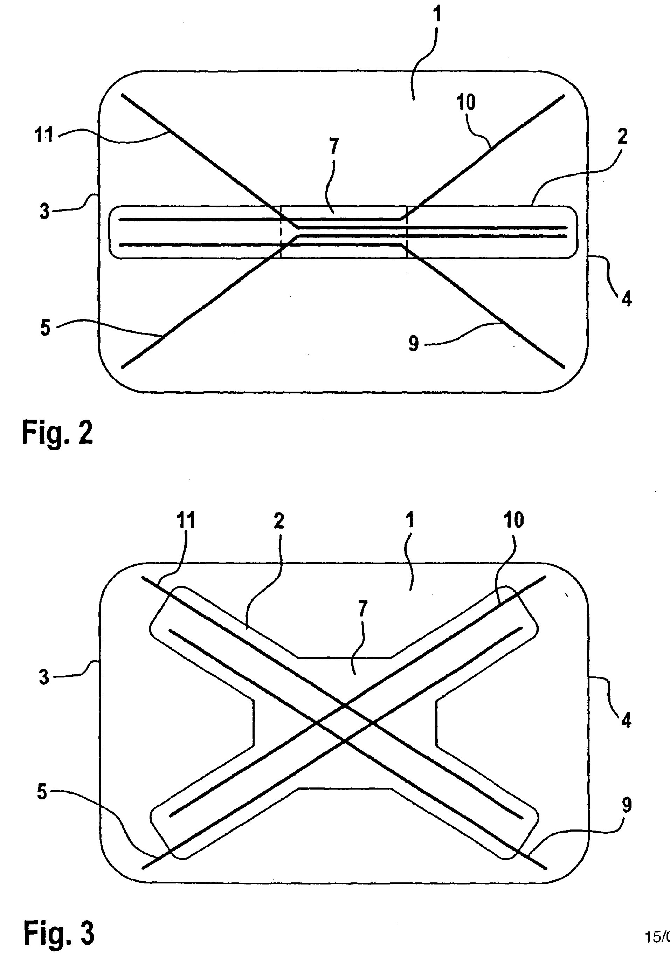

In Figur 2 ist der Ausgleichsbehälter 2 aus Figur 1 in einer Draufsicht dargestellt. Neben den Entlüftungsleitungen 5, 9 sind zwei weitere Entlüftungsleitungen 10, 11 angeordnet. Die Entlüftungsleitungen 5, 9 - 11 verlaufen über einen weiten Bereich diagonal auf den Ausgleichsbehälter 2 zu, bevor sie im Bereich der Erweiterung 7 in den Ausgleichsbehälter 2 eintreten und anschließend parallel zu den gegenüberliegenden Seitenwänden 3, 4 geführt sind. Einen Ausgleichsbehälter 2 mit vier Teilarmen zeigt Figur 3. Hierbei verlaufen die Entlüftungsleitungen 5, 9 - 11 über ihre gesamte Länge diagonal zu den jeweiligen Seitenwänden.

## Patentansprüche

1. Entlüftungseinrichtung für einen Kraftstoffbehälter, mit einem Ausgleichsbehälter im Kraftstoffbehälter und in diesen Ausgleichsbehälter mündenden Entlüftungsleitungen, wobei die Entlüftungsleitungen mit jeweils einem Ende in der Nähe mindestens einer Seitenwand des Kraftstoffbehälters beginnend, zu einer gegenüberliegenden Seitenwand verlaufen, so dass das jeweils andere Ende in diesem Bereich angeordnet ist und dass das jeweils andere Ende der Entlüftungsleitungen in dem Ausgleichsbehälter angeordnet ist, **dadurch gekennzeichnet, dass** vier Entlüftungsleitungen (5, 9 - 11) im Kraftstoffbehälter (1) angeordnet sind, wobei zumindest der außerhalb des Ausgleichbehälters (2) liegende Teil der Entlüftungsleitungen (5, 9 - 11) in jeweils einer Ecke des Kraftstoffbehälters (1) beginnend, diagonal verlaufend angeordnet ist.

2. Entlüftungseinrichtung nach Anspruch 1, **dadurch gekennzeichnet, dass** die Entlüftungsleitungen (5, 9 - 11) an einer Stelle (7) in den Ausgleichsbehälter (2) eintreten.

3. Entlüftungseinrichtung nach Anspruch 1 und 2, **dadurch gekennzeichnet, dass** die Entlüftungsleitungen (5, 9 - 11) mittig in den Ausgleichsbehälter (2) eintreten.

4. Entlüftungseinrichtung nach Anspruch 1 bis 3, **dadurch gekennzeichnet, dass** die Entlüftungsleitungen (5, 9 - 11) an verschiedenen Stellen in den Ausgleichsbehälter (2) eintreten.

5. Entlüftungseinrichtung nach mindestens einem der Ansprüche 1 bis 4, **dadurch gekennzeichnet, dass** die Entlüftungsleitungen (5, 9 - 11) innerhalb des Ausgleichsbehälters (2) über eine größere Strecke diagonal verlaufend angeordnet sind.

6. Entlüftungseinrichtung nach mindestens einem der Ansprüche 1 bis 5, **dadurch gekennzeichnet, dass** der Ausgleichsbehälter (2) eine Erweiterung (7) aufweist, die mit dem Innern des Kraftstoffbehälters (1) verbunden ist.

7. Entlüftungseinrichtung nach Anspruch 6, **dadurch gekennzeichnet, dass** die Erweiterung (7) über eine Saugstrahlpumpe und/oder ein Ventil mit dem Innern des Kraftstoffbehälters (1) verbunden ist.

8. Entlüftungseinrichtung nach mindestens einem der Ansprüche 1 bis 6, **dadurch gekennzeichnet, dass** die Erweiterung (7) über eine Kraftstoffpumpe mit dem Innern des Kraftstoffbehälters (1) verbunden ist.

9. Entlüftungseinrichtung nach mindestens einem der Ansprüche 1 bis 8, **dadurch gekennzeichnet, dass** in dem Ausgleichsbehälter (2) ein Roll-over-Ventil und ein Aktivkohlefilter angeordnet ist.

## Claims

1. Ventilation device for a fuel tank, having a compensator reservoir in the fuel tank and ventilation lines opening into this compensator reservoir, wherein the ventilation lines run with in each case one end from in the vicinity of the at least one side wall of the fuel tank to an opposite side wall such that the respectively other end is arranged in this region and such that the respectively other end of the ventilation lines is arranged in the compensator reservoir, **characterized in that** four ventilation lines (5, 9-11) are arranged in the fuel tank (1), with at least that part of the ventilation lines (5, 9-11) which is located outside the compensator reservoir (2) being arranged running diagonally from in each case one corner of the fuel tank (1).

2. Ventilation device according to Claim 1, **characterized in that** the ventilation lines (5, 9 - 11) enter into the compensator reservoir (2) at one location (7).

3. Ventilation device according to Claims 1 and 2, **characterized in that** the ventilation lines (5, 9 - 11) enter centrally into the compensator reservoir (2).

4. Ventilation device according to Claims 1 to 3, **characterized in that** the ventilation lines (5, 9 - 11) enter into the compensator reservoir (2) at different locations.

5. Ventilation device according to at least one of Claims 1 to 4, **characterized in that** the ventilation lines (5, 9 - 11) are arranged running diagonally over a relatively large distance within the compensator reservoir (2).

6. Ventilation device according to at least one of Claims 1 to 5, wherein the compensator reservoir (2) has a widened section (7) which is connected to the interior of the fuel tank (1).

7. Ventilation device according to Claim 6, **characterized in that** the widened section (7) is connected to the interior of the fuel tank (1) via an ejector and/or a valve.

8. Ventilation device according to at least one of Claims 1 to 6, **characterized in that** the widened section (7) is connected to the interior of the fuel tank (1) via a fuel pump.

9. Ventilation device according to at least one of Claims 1 to 8, **characterized in that** a roll-over valve and an activated carbon filter are arranged in the compensator reservoir (2).

## Revendications

1. Dispositif d'aération pour réservoir à carburant, comportant un réservoir de compensation dans le réservoir à carburant et des conduites d'aération débouchant dans ce réservoir de compensation, où les conduites d'aération, qui commencent chacune par une extrémité à proximité d'au moins une paroi latérale du réservoir à carburant, vont vers une paroi latérale sur le côté opposé, si bien que l'autre extrémité correspondante est disposée dans cette zone et que l'autre extrémité correspondante des conduites d'aération est placée dans le réservoir de compensation, **caractérisé par le fait que** quatre conduites d'aération (5, 9 - 11) sont placées dans le réservoir à carburant (1), au moins la partie des conduites d'aération (5, 9 - 11) se trouvant à l'extérieur du réservoir de compensation (27) étant placée en diagonale en commençant chacune dans un coin du réservoir à carburant (1).

2. Dispositif d'aération selon la revendication 1, **caractérisé par le fait que** les conduites d'aération (5, 9 - 11) entrent à un endroit (7) dans le réservoir de compensation (2).

3. Dispositif d'aération selon la revendication 1 et 2, **caractérisé par le fait que** les conduites d'aération (5, 9 - 11) entrent au milieu dans le réservoir de compensation (2).

4. Dispositif d'aération selon la revendication 1 à 3, **caractérisé par le fait que** les conduites d'aération (5, 9 - 11) entrent à différents endroits dans le réservoir de compensation (2).

5. Dispositif d'aération selon au moins l'une des revendications 1 à 4, **caractérisé par le fait que** les conduites d'aération (5, 9 - 11) sont placées en diagonale à l'intérieur du réservoir de compensation (2) et ceci sur une longueur importante.

6. Dispositif d'aération selon au moins l'une des revendications 1 à 5, **caractérisé par le fait que** le réservoir de compensation (2) comporte une extension (7) qui est en liaison avec l'intérieur du réservoir à carburant (1).

7. Dispositif d'aération selon la revendication 6, **caractérisé par le fait que** l'extension (7) est en liaison avec l'intérieur du réservoir à carburant (1) par l'intermédiaire d'une pompe à jet aspirant et/ou d'une soupape.

8. Dispositif d'aération selon au moins l'une des revendications 1 à 6, **caractérisé par le fait que** l'extension (7) est en liaison avec l'intérieur du réservoir à carburant (1) par l'intermédiaire d'une pompe à carburant.

9. Dispositif d'aération selon au moins l'une des revendications 1 à 8, **caractérisé par le fait qu'**une soupape de carambolage et un filtre à charbon actif sont placés dans le réservoir de compensation (2).
